# EUROPEAN PATENT SPECIFICATION

(11) **EP 0 396 200 B1**
(45) Date of publication and mention of the grant of the patent: **29.09.1993**
(21) Application number: 90201108.9
(22) Date of filing: 02.05.1990
(51) Int. Cl.: B30B 11/20, G01D 5/249, G01B 7/31

(54) **Pelleter**
Pelletpresse
Presse à agglomérer

(30) Priority: 03.05.1989 NL 8901130
(43) Date of publication of application: 07.11.1990
(73) Proprietor: Van Aarsen Machinefabriek B.V., NL-6097 EW Panheel (Heel) (NL)
(72) Inventor: Smeets, Gerardus Hubertus, NL-6015 RE Neeritter (NL); Vries, Hendrikus Hubertus, NL-6049 BX Herten (NL)
(74) Representative: Smulders, Theodorus A.H.J., Ir.

(56) References cited:
- EP-A- 0 161 124
- EP-A- 0 231 764
- FR-A- 2 591 438
- GB-A- 2 058 358
- US-A- 2 626 576

## Description

The invention relates to a pelleter, comprising an annular extrusion die which is bearing-mounted on a stationary shaft and adapted to be driven, and press rollers which are arranged within this extrusion die, mounted in bearing journals and adapted to be driven by that extrusion die, the axes of the press rollers being eccentric relatively to the bearing journals and each bearing journal of a press roller comprising a clamping disc for clamping the bearing journal in a given desired position, there being provided an adjustment apparatus for adjusting the position of each press roller relatively to the extrusion die.

Such a pelleter is known from European patent application 0,246,710. The adjustment apparatus mounted on this known pelleter provides the possibility of adjusting the position of each press roller relative to the extrusion die during the operation of the pelleter, so that an optimum relative position of press roller and extrusion die can easily and readily be obtained on the basis of the end product delivered by the pelleter. The exact position of the press rollers cannot be determined then. The only indication about the correct position of the press roller relative to the die can be obtained on the basis of the extruded product delivered or, in the case of a hydraulic adjustment apparatus, possibly by measuring the hydraulic pressure in the adjustment apparatus. The two methods described hereinabove are based on an indirect indication of the position of the press rollers.

The invention aims to provide a pelleter in which the relative position of press roller and extrusion die can be determined directly, i.e. not by an indirect method. To that effect the pelleter according to the invention comprises a measuring apparatus for determining the position of the eccentric bearing journal relative to the position of the press roller, which measuring apparatus comprises a series of projections provided on the circumference of the clamping disc and an electromagnetic transducer arranged in the stationary shaft opposite said projections.

An indicating device for determining the relative position of press roller and die is known per se from US patent specification 2,626,576. This indicating device comprises a graduated scale which is coupled with the bearing journal of the press roller via a mechanical transmission.

The relation between the angular displacement of a bearing journal of a press roller and the change in distance between the circumference of the press roller and the inner circumferential wall of the die is not linear. To linearize this relationship and thus to simplify a processing of the signals supplied by the electromagnetic transducer, it is arranged for the lengths of the projections in the circumferential direction of the clamping disc to be mutually different in such a way that a displacement of the clamping disc through a random projection length corresponds to a fixed change in distance between the inner circumferential wall of the die and the circumference of the press roller.

By connecting the electromagnetic transducer, which supplies a pulse upon the passage of each projection flank, with a pulse counting device a situation is achieved where each pulse corresponds to a fixed change in distance between the circumference of the press roller and the inner circumferential wall of the die.

Embodiments of the pelleter according to the invention with the measuring apparatus mounted on it will now be further explained with reference to the drawings, in which:
Fig. 1 is a schematic drawing of the pelleter;
Fig. 2 shows the die with press rollers according to Fig. 1 to an enlarged scale;
Fig. 3 is a schematic representation of the measuring principle;
Fig. 4 shows a first embodiment of the measuring apparatus used;
Fig. 5 shows a second embodiment of the measuring apparatus; and
Fig. 6 shows a variant of the measuring apparatus according to Fig. 5.

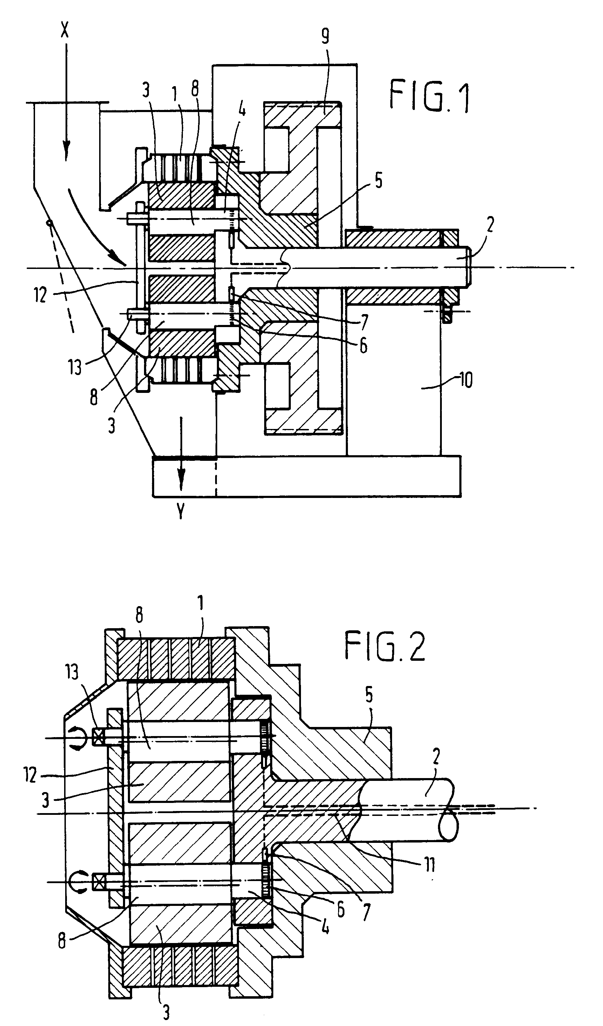

Figs. 1-2 show an annular die 1 which is mounted on a die holder 5 which is bearing-mounted on a stationary main shaft 2. The main shaft 2 is supported by a machine frame 10. Mounted on the die holder 5 is a driving pulley 9 which is driven by an electric motor and used for rotating the annular die 1 about the stationary main shaft 2. Within the die 1 two press rollers 3 are arranged, mounted on press roller shafts 8. The bearing journals 4 provided on the right-hand side in the drawing are mounted in recesses provided in the end plate of the stationary main shaft 2. The bearing journals provided on the left-hand side of the press roller shafts 8 are mounted in a front plate 12, which is connected to the main shaft 2 in a manner that is not shown. The ends 13 of the press roller shaft 8 which extend outside the front plate 12 are of polygonal configuration. The optional adjustment apparatus mounted on the front plate 12 engages with these shaft ends 13 for adjustment of the press rollers 3. At the ends of the bearing journals 4 the clamping discs 6 are schematically shown. In the stationary main shaft 2 opposite the circumference of a clamping disc 6 a transducer 7 is provided which is connected to an electronic control device (not shown) via an electric line in the main shaft 2.

The material to be processed in the pelleter is supplied in the direction of arrow X to the interior of the rotating, annular die 1, which drives the press rollers 3. The press rollers 3 press the material through the channels provided in the annular die 1, after which the product leaves the pelleter in granular or pellet form in the direction indicated with an arrow Y.

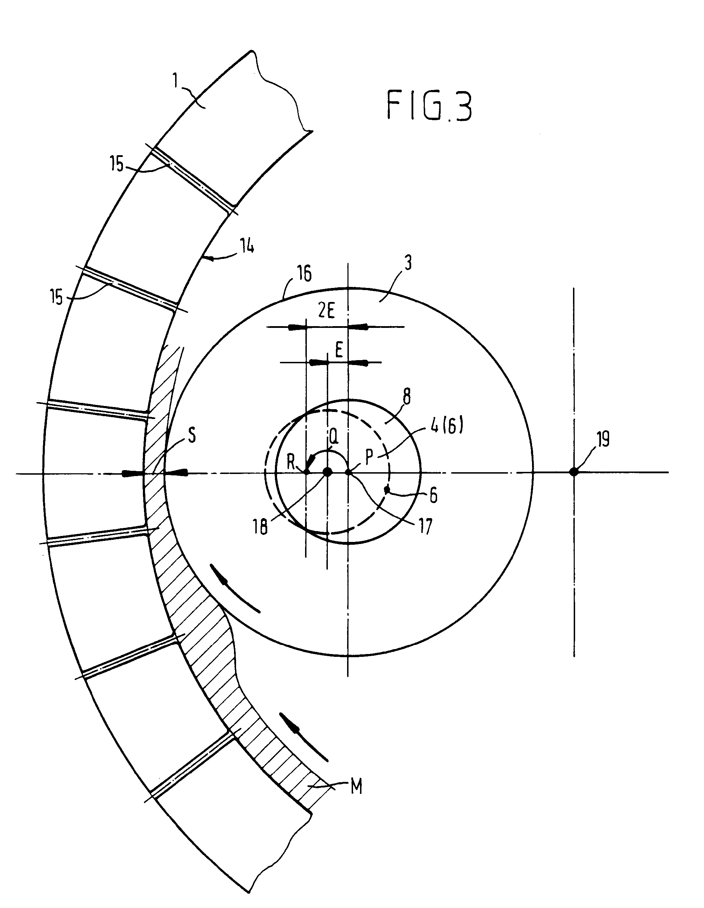

To explain the measuring principle used, Fig. 3 schematically shows the relative position of a number of parts shown in Figs. 1-2. The die 1 in which openings 15 are provided has an inner wall 14 which is at a distance S from the circumference 16 of the press roller 3. At 17 the axis of the press roller shaft 8 is indicated. The shaft journal 4 has an axis 18 and the distance between the axes 17, 18 equals E, which is the eccentricity. In the position shown in Fig. 3 the distance S between the inner wall 14 of the die 1 and the circumference 16 of the press roller 3 is at a maximum. This maximum distance S is smaller than the maximum displacement of the press roller 3 in the direction of the die 1, which is twice the eccentricity E. This means that even when the press roller circumference 16 or the inner wall 14 of the die 1 have become worn to a certain extent it still remains possible to position the press roller 3 against the inner wall 14 of the die 1. At 19 the axis of the die 1 is indicated. Between the press roller 3 and the die 1 there is the material M which is pressed out by the press roller 3 via the openings 15 in the die 1.

At the end of the shaft journal 4 a clamping disc 6 is provided indicated in Fig. 3 by broken lines. The centre of the clamping disc 6 is on the axis 18 of the shaft journal 4.

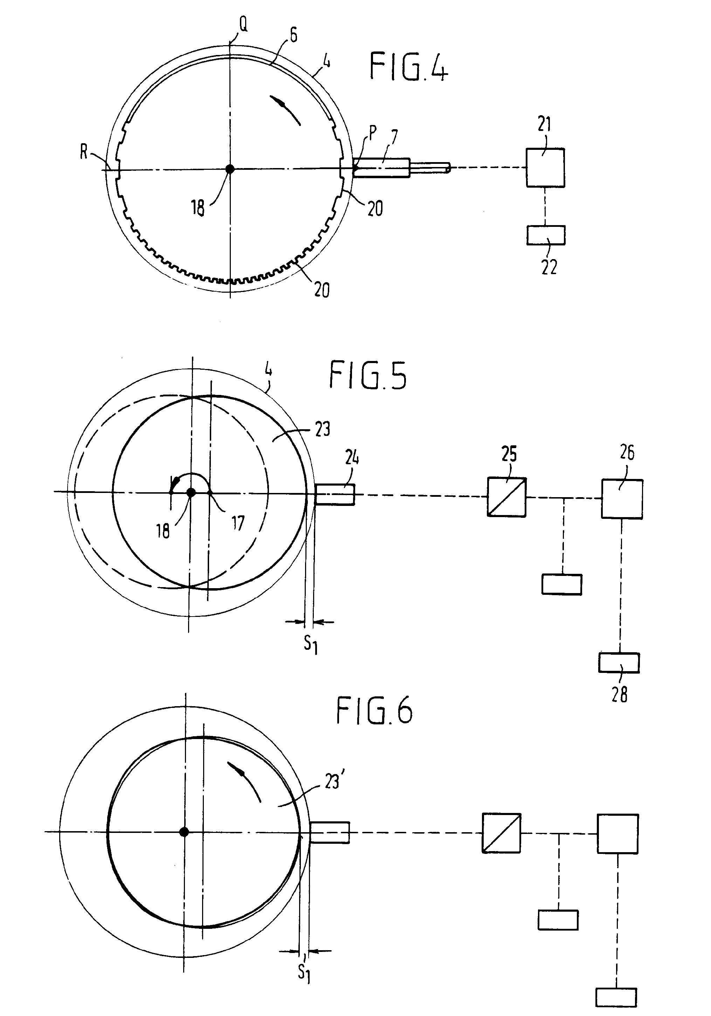

By turning the shaft journal 4 about its axis 18 the distance S will be changed. The axis 17 of press roller 3 then traverses the circular arc P-Q-R. During this displacement the clamping disc 6 rotates about the axis 18 of the shaft journal 4. It will be clear there is not a linear relationship between the change in the distance S and the displacement of the axis 17 through a given angle along the arc P-Q-R. When displacement starts from the point P the change in the distance S will initially be extremely small, whereas in the vicinity of the point Q the relationship between the angular displacement of the clamping disc 6 and the change in the distance S will be approximately linear. This non-linear relationship can be linearized by providing on the circumference of the clamping disc 6 a plurality of projections 20 whose lengths in the circumferential direction vary (see Fig. 4). This applies not only to the projections 20 but also to the distances between two successive projections 20. The distance between two successive projection flanks can be set such that the distance between these two flanks corresponds to a change in the distance S of x mm, where x is 0.25 or 0.5 mm, for instance, or another value. At the points P and R both the projections and the interspaces between the projections are considerably longer in the circumferential direction than at point Q. Of course, this requires the clamping disc 6 serving as a measuring disc to be mounted as indicated in Fig. 4. If the disc 6 were rotated one quarter of a turn relatively to the shaft journal 4, there would no longer be a linear relationship between the angular displacement of the disc 6 and the change in the distance S.

Provided in the stationary main shaft 2, opposite the circumference of the measuring disc 6, is a transducer 7, capable of supplying a pulse each time a projection flank passes the transducer 7. Such transducers are known per se and usually of the magnetic-inductive type. The transducer 7 is connected to a pulse counting control unit 21, to which also a read out device 22 may be connected.

When a press roller comprising a measuring apparatus according to Figs. 3-4 is positioned against the inner wall 14 of the die 1 and the counting device 21 is then set at zero, the exact distance from the circumference 16 of the press roller 3 to the inner wall 14 of the die 1 after displacement of the press roller can be determined by counting the number of pulses supplied by the transducer 7. The measurement carried out in this way is insensitive to clearance in the adjusting mechanism for adjusting the press roller, which clearance may play a role in an indirect measurement.

Fig. 5 shows a second embodiment of a measuring system which is based on direct distance measuring. Mounted on the clamping disc 6 is a measuring disc 23, whose centre is, for instance, on the axis 17 of the press roller 3. At 18 the axis of the shaft journal 4 is indicated. Mounted in the stationary main shaft 2 is a distance transducer 24, capable of directly determining the distance S1 between the transducer 24 and the circumference of the disc 23. The variable distance S1 is in some way or other related to the distance S, shown in Fig. 3. The position shown in Fig. 5 corresponds to a maximum distance S. Upon adjustment of the press roller 3, the axis 17, and hence the centre of the measuring disc 23, will traverse a semicircular path as shown in Fig. 3 by P-Q-R. The distance transducer 24 is capable of supplying an analogue signal, which is a measure of the magnitude of the distance S1 and hence of the distance S. The transducer 24 is connected with an analogue/digital converter 25 which in turn is connected with a pulse counting control unit 26 connected to a read out unit 28.

The measuring system according to Fig. 5 requires a very accurate calibration of the analogue signal supplied by the transducer 24 for the relationship between the signal level and a distance S to be read out. After calibration of the system the analogue signal supplied by the distance transducer 24 constitutes a direct measure of the magnitude of the distance S set.

As a measuring disc, instead of a circular measuring disc 23, a cam disc 23' (Fig. 6) may also be used. The cam disc 23' may be shaped in such a way that the relationship between the angular displacement of the disc 23' and the change in distance S1, and hence the distance S, is linear as in the case of the measuring disc according to Fig. 4. Electronic linearisation of the analogue signal supplied by the distance transducer 24 can then be omitted.

## Claims

1. A pelleter comprising an annular extrusion (1) die which is bearing-mounted on a stationary shaft (2) and adapted to be driven, and press rollers (3) which are arranged within said extrusion die, mounted in bearing journals (4) and adapted to be driven by said extrusion die (1), the axes of the press rollers being eccentric relatively to the bearing journals and each bearing journal (4) of a press roller (3) comprising a clamping disc (6) for clamping the bearing journal (4) in a given desired position, there being provided an adjustment apparatus for adjusting the position of the press roller relative to the extrusion die, characterized in that the pelleter comprises a measuring apparatus (6, 7) for determining the position of the eccentric bearing journal (4) relative to the position of the press roller (3), which measuring apparatus (6, 7) comprises a series of projections (20) provided on the circumference of the clamping disc (6) and an electromagnetic transducer (7) arranged in the stationary shaft (2) opposite said projections (20).

2. Apparatus according to claim 1, characterized in that the lengths of the projections (20) in the circumferential direction of the clamping disc (6) are mutually different in such a way that a turn of the clamping disc (6) through one random projection length corresponds to a fixed change in distance (S) between the inner circumferential wall (14) of the die (1) and the circumference (16) of the press roller (3).

3. Apparatus according to claims 1-2, characterized in that the electromagnetic transducer (7) is connected to a pulse counting control unit (21).

4. Apparatus according to claim 1, characterized in that the measuring apparatus comprises a measuring disc (23) mounted eccentrically on the clamping disc (6), the centre of said disc (23) being on the axis (17) of the press roller (3), and a distance transducer (24) arranged in the stationary shaft (2) opposite the circumferential edge of said measuring disc (23), said transducer (24) being capable of supplying an analogue signal which is a measure for the distance (S) between the inner circumference (14) of the die (1) and the circumference (16) of the press roller (3).

5. Apparatus according to claim 4, characterized in that the distance transducer (24) is connected to an analogue/digital converter (25) which is connected to a pulse counting control unit (26).

6. Apparatus according to claims 4-5, characterized in that the measuring disc (23') is a cam disc of such configuration and attached to the clamping disc in such a way that there is a linear relationship between the angular displacement of the cam disc (23') and the change in distance (S) between the inner circumference (14) of the die (1) and the circumference (16) of the press roller (3).

## Patentansprüche

1. Pelletpresse, die eine ringförmige Extrusionsform (1) umfaßt, die gelagert an einer stationären Welle (2) angebracht ist und angetrieben werden kann, sowie Quetschwalzen (3), die in dieser Extrusionsform angeordnet sind, in Lagerzapfen (4) angebracht sind und von der Extrusionsform (1) angetrieben werden können, wobei die Achsen der Quetschwalzen in bezug auf die Lagerzapfen exzentrisch sind und jeder Lagerzapfen (4) einer Quetschwalze (3) eine Klemmscheibe (6) umfaßt, die den Lagerzapfen (4) in einer vorgegebenen gewünschten Stellung festklemmt, wobei eine Einstellvorrichtung zum Einstellen der Position der Quetschwalze in bezug auf die Extrusionsform vorhanden ist, **dadurch gekennzeichnet,** daß die Pelletpresse eine Meßvorrichtung (6, 7) zur Bestimmung der Position des exzentrischen Lagerzapfens (4) in bezug auf die Position der Quetschwalze (3) umfaßt, wobei die Meßvorrichtung (6, 7) eine Reihe von Vorsprüngen (20) umfaßt, die am Umfang der Klemmscheibe (6) vorhanden sind, sowie einen elektromagnetischen Meßwandler (7), der den Vorsprüngen (20) gegenüberliegend in der stationären Welle (2) angebracht ist.

2. Vorrichtung nach Anspruch 1, **dadurch gekennzeichnet,** daß die Längen der Vorsprünge (20) in der Umfangsrichtung der Klemmscheibe (6) voneinander so verschieden sind, daß eine Drehung der Klemmscheibe (6) über eine beliebige Vorsprungslänge einer festen Änderung des Abstandes (S) zwischen der Innenumfangswand (14) der Form (1) und dem Umfang (16) der Quetschwalze (3) entspricht.

3. Vorrichtung nach den Ansprüchen 1-2, **dadurch** **gekennzeichnet,** daß der elektromagnetische Wandler (7) mit einer Impulszähl-Kontrolleinheit (21) verbunden ist.

4. Vorrichtung nach Anspruch 1, **dadurch gekennzeichnet,** daß die Meßvorrichtung eine Meßscheibe (23) umfaßt, die exzentrisch auf der Klemmscheibe (6) angebracht ist, wobei der Mittelpunkt der Scheibe (23) auf der Achse (17) der Quetschwalze (3) liegt, sowie einen Abstandsmeßwandler (24) der in der stationären Welle (2) gegenüber dem Umfangsrand der Meßscheibe (23) angeordnet ist, wobei der Wandler (24) in der Lage ist, ein analoges Signal zu erzeugen, das ein Maß des Abstandes (S) zwischen dem Innenumfang (14) der Form (1) und dem Umfang (16) der Quetschwalze (3) darstellt.

5. Vorrichtung nach Anspruch 4, **dadurch gekennzeichnet,** daß der Abstandsmeßwandler (24) mit einem Analog/Digital-Wandler (25) verbunden ist, der mit einer Impulszähl-Kontrolleinheit (26) verbunden ist.

6. Vorrichtung nach den Ansprüchen 4-5, **dadurch gekenn****zeichnet,** daß die Meßscheibe (23') eine Kurvenscheibe ist, die eine solche Form hat und so an der Klemmscheibe angebracht ist, daß es eine lineare Beziehung zwischen der Winkelverschiebung der Kurvenscheibe (23') und der Änderung des Abstands (S) zwischen dem Innenumfang (14) der Form (1) und dem Umfang (16) der Quetschwalze (3) gibt.

## Revendications

1. Presse à agglomérer comprenant une matrice d'extrusion annulaire (1) qui est montée sur palier sur un arbre stationnaire (2) et apte à être entraînée, et des rouleaux presseurs (3) qui sont agencés à l'intérieur de ladite matrice d'extrusion, montés dans des tourillons (4) et aptes à être entraînés par ladite matrice d'extrusion (1), les axes des rouleaux presseurs étant excentriques relativement aux tourillons et chaque tourillon (4) d'un rouleau presseur (3) comprenant un disque de serrage (6) pour serrer le tourillon (4) dans une position souhaitée donnée, un appareil de réglage étant prévu pour le réglage de la position du rouleau presseur relativement à la matrice d'extrusion, caractérisée en ce que la presse à agglomérer comprend un appareil de mesure (6, 7) pour déterminer la position du tourillon excentrique (4) relativement à la position du rouleau presseur (3), ledit appareil de mesure (6, 7) comprend une série de saillies (20) prévues sur la circonférence du disque de serrage (6) et un transducteur électromagnétique (7) disposé dans l'arbre stationnaire (2) opposé auxdites saillies (20).

2. Appareil selon la revendication 1, caractérisé en ce que les longueurs des saillies (20) dans la direction circonférentielle du disque de serrage (6) sont mutuellement différentes de telle manière qu'un tour du disque de serrage (6) sur une longueur de projection accidentelle correspond à un changement fixe de la distance (S) entre la paroi circonférentielle interne (14) de la matrice (1) et la circonférence (16) du rouleau presseur (3).

3. Appareil selon les revendications 1 ou 2, caractérisé en ce que le transducteur électromagnétique (7) est connecté à une unité de commande de comptage d'impulsions (21).

4. Appareil selon la revendication 1, caractérisé en ce que l'appareil de mesure comprend un disque de mesure (23) monté excentriquement sur le disque de serrage (6), le centre dudit disque (23) se trouvant sur l'axe (17) du rouleau presseur (3), et un transducteur de distance (24) disposé dans l'arbre stationnaire (2) opposé au bord circonférentiel dudit disque de mesure (23), ledit transducteur (24) pouvant fournir un signal analogique qui constitue une mesure de la distance (S) entre la circonférence interne (14) de la matrice (1) et la circonférence (16) du rouleau presseur (3).

5. Appareil selon la revendication 4, caractérisé en ce que le transducteur de distance (24) est connecté à un convertisseur analogique/ numérique (25) qui est connecté à une unité de commande de comptage d'impulsions (26).

6. Appareil selon les revendications 4 ou 5, caractérisé en ce que le disque de mesure (23') est un disque à came d'une telle configuration et fixé au disque de serrage de telle manière qu'il existe une relation linéaire entre le déplacement angulaire du disque à came (23') et le changement de distance (S) entre la circonférence interne (14) de la matrice (1) et la circonférence (16) du rouleau presseur (3).
